# EUROPEAN PATENT SPECIFICATION

(11) **EP 3 244 305 B1**
(45) Date of publication and mention of the grant of the patent: **24.08.2022**
(21) Application number: 16290076.5
(22) Date of filing: 09.05.2016
(51) Int. Cl.: G06F 9/50, G06F 8/60, G06F 9/455

(54) **METHOD OF AND DEVICE FOR DEPLOYING AN APPLICATION RELIABLY IN A COMPUTER NETWORK**
VERFAHREN UND VORRICHTUNG ZUR ZUVERLÄSSIGEN BEREITSTELLUNG EINER ANWENDUNG IN EINEM COMPUTERNETZWERK
PROCÉDÉ ET DISPOSITIF DE DÉPLOIEMENT D'UNE APPLICATION DE MANIÈRE FIABLE DANS UN RÉSEAU INFORMATIQUE

(43) Date of publication of application: 15.11.2017
(73) Proprietor: Alcatel Lucent, 91620 Nozay (FR)
(72) Inventor: Ruichuan, Chen, 70435 Stuttgart (DE); Bimal, Viswanath, 70435 Stuttgart (DE); Istemi, Akkus, 70435 Stuttgart (DE); Ivica, Rimac, 70435 Stuttgart (DE); Volker, Hilt, 70435 Stuttgart (DE)
(74) Representative: DREISS Patentanwälte PartG mbB

(56) References cited:
- WO-A1-2012/105980
- US-A1- 2014 201 218
- INDIKA MEEDENIYA ET AL: "Reliability-driven deployment optimization for embedded systems", JOURNAL OF SYSTEMS & SOFTWARE, ELSEVIER NORTH HOLLAND, NEW YORK, NY, US, vol. 84, no. 5, 3 January 2011 (2011-01-03), pages 835-846, XP028170583, ISSN: 0164-1212, DOI: 10.1016/J.JSS.2011.01.004 [retrieved on 2011-01-28]
- RAGHAVACHARI M ET AL: "The deployer's problem: configuring application servers for performance and reliability", SOFTWARE ENGINEERING, 2008. ICSE '08. ACM/IEEE 30TH INTERNATIONAL CONFERENCE ON; [INTERNATIONAL CONFERENCE ON SOFTWARE ENGINEERING], IEEE, PISCATAWAY, NJ, USA, vol. CONF. 25, 3 May 2003 (2003-05-03), pages 484-489, XP010640144, ISSN: 0270-5257, DOI: 10.1109/ICSE.2003.1201226 ISBN: 978-0-7695-1877-0

## Description

### Field of the invention

The invention concerns a method of and a device for deploying an application reliably in a computer network, in particular a large scale data center.

### Background

Applications are deployed in data center infrastructures to maintain high reliability.

WO 2012/105980 A1 discloses technologies for deploying an application in a ubiquitous computing system.

The paper Reliability-driven deployment optimization for embedded systems by Indika Meedeniya et. al. Journal of systems & software, Elsevier north Holland, New York, NY, US, vol. 84, no. 5, 3 January 2011, pages 835-849 discloses a reliability-driven deployment of components for embedded systems.

One technique to increase the reliability of these applications is to use redundancy. The developers of an application deploy multiple replicas of their application into large scale data centers. However, such redundancy efforts can be undermined if the reliability of underlying components does not meet the expectations. For example some or all replicas may fail at the same time due to the common hardware or software dependency shared by replicas.

This problem is increasingly relevant, as developers have limited control over the placement of their application in a data center operated by data center providers. Finding a reliable deployment for an application in particular in a large scale data center, has been proven to be NP-hard, meaning there is no polynomial-time solution.

Therefore it is desirable to provide mechanisms for deploying an application and for application developers to assess the reliability of an application deployment in a data center, e.g. using a part of an entire data center infrastructure.

### Summary

This goal is achieved by a computer-implemented method, according to claim 1, and a corresponding device, according to claim 12.

The method of deploying an application reliably in a computer network comprises:
Determining information about the reliability of a predetermined first deployment for the application,
Determining information about the reliability of a predetermined second deployment for the application,
Comparing the information about the reliability of the first deployment with the information about the reliability of the second deployment,
Selecting the first deployment or the second deployment for deploying the application in the computer network depending on the result of the comparison.

The information about the reliability of the respective predetermined deployment is determined by Generating respective failure states for a plurality of components for deploying the application according to the respective predetermined deployment,
Determining information about the reachability of a plurality of components depending on the generated failure states,
Determining the information about the reliability of the respective predetermined deployment depending on the information about the reachability.

This way the reliability of an application deployment in a computer network, e.g. of a data center or computer cloud is assessed and a deployment plan for an application is searched and found that meets the given reliability criteria.

Preferably the steps of determining, comparing and selecting are repeated until a predetermined number of repetitions is reached, a predetermined time period has passed, or a predetermined reliability threshold has been reached by the selected deployment.

Preferably the information about the reliability of the respective predetermined deployment is determined for all components for deploying the application according to the respective predetermined deployment.

Preferably a deployment with a higher reliability is selected over a deployment with a lower reliability.

Preferably a deployment with a lower reliability is selected over a deployment with a higher reliability, depending on a predetermined acceptance probability.

Preferably the reliability of the respective predetermined deployment is assessed by randomly generating a failure state for respective components of the computer network based on a predetermined failure probability of the respective component.

Preferably the method comprises receiving information about the failure probability and the respective component.

Preferably a deployment for assessing the reliability thereof is selected from a plurality of deployments available in the computer network using a predetermined variance reduction criterion.

Preferably the computer network has one of a Fat Tree, BCube or DCell topology.

Preferably the computer network comprises at least one network node for accessing the computer network and a plurality of hosts for executing respective replica of the application according to the respective predetermined deployment, and wherein the information about the reliability of the application is determined depending on the connectivity between the at least one network node and respective hosts according to the predetermined deployment.

Preferably the information about the reliability of the application is assessed depending on connectivity among different replicas of the application.

Further developments of the invention can be gathered from the dependent claims and the following description.

### Brief description of the figures

Fig. 1 schematically depicts part of a computer network,
Fig. 2 schematically depicts steps of an exemplary method.

### Description of the embodiments

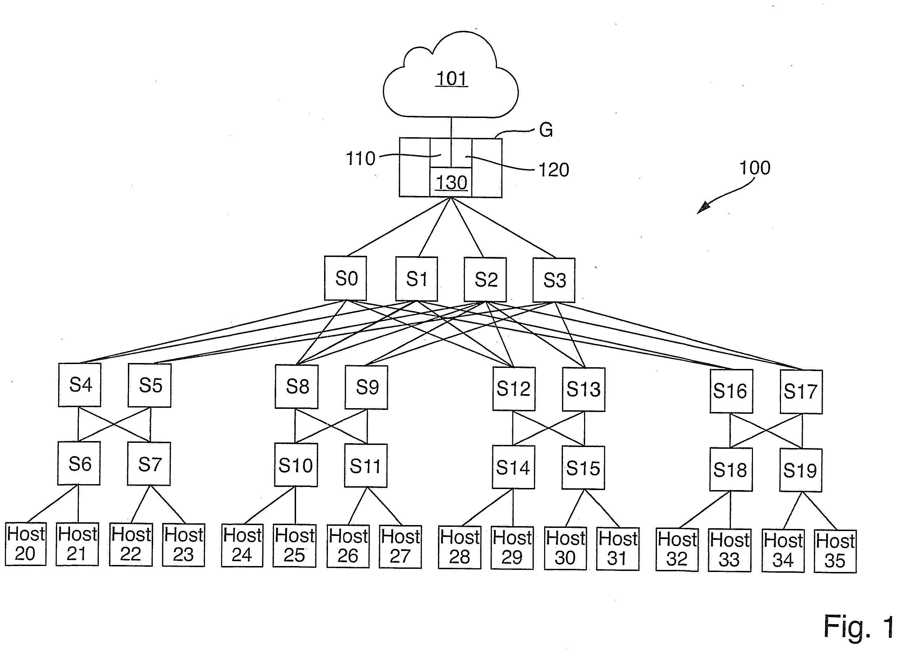

Figure 1 schematically depicts part of a computer network 100. Components of the computer network are devices like hosts for executing an application, network nodes, such as switches or gateways, and data links connecting them.

In the example computer network 100 is part of a data center. In the example in figure 1 the computer network 100 in the data center has a fat tree topology for connecting network nodes. For illustration purposes only, it is assumed that the data center consist of 16 hosts labelled in figure 1 as Host 20, ..., Host 35.

However the invention is not limited to this exact network topology or number of network nodes. The invention also applies for different numbers of network nodes, data links or other topologies, e.g. BCube, DCell, and when multiple data centers or computer networks are connected.

The computer network 100 in the example comprises a gateway G. Gateway G is a network node that connects to the Internet, symbolized by a cloud 101. In the example, Ethernet or Transmission Control Protocol / Internet Protocol are used for connecting network nodes and Internet via data links.

Hosts in the example are network nodes adapted to execute a copy of an application. Copies of an application are referred to as replica of the application.

In the example any host may or may not be adapted to execute a replica of the application.

The application is accessible from the Internet on any of the hosts adapted to execute the application via gateway G. The application may be accessible from the Internet via different network nodes as well.

In computer network 100 gateway G is connected to core switches S0, S1, S2, S3 via respective data links.

Core switches S0 and S1 are connected to switches S4, S8, S12 and S16 with respective data links. Core switches S2 and S3 are connected to switches S5, S9, S13 and S17 with respective data links.

Switches S4 and S5 are connected to switches S6 and S7 with respective data links. Switch S6 is connected to Host 20 and Host 21 with respective data links. Switch S7 is connected to Host 22 and Host 23 with respective data links.

Switches S8 and S9 are connected to Switches S10 and S11 with respective data links. Switch S10 is connected to Host 24 and Host 25 with respective data links. Switch S11 is connected to Host 26 and Host 27 with respective data links.

Switches S12 and S14 are connected to switches S14 and S15 with respective data links. Switch S14 is connected to Host 28 and Host 29 with respective data links. Switch S15 is connected to Host 30 and Host 31 with respective data links.

Switches S16 and S17 are connected to switches S18 and S19 with respective data links. Switch S18 is connected to Host 32 and Host 33 with respective data links. Switch S19 is connected to Host 34 and Host 35 with respective data links.

The aforementioned switches are network nodes in the computer network 100. Other network nodes, e.g. routers or further gateways may be used as well.

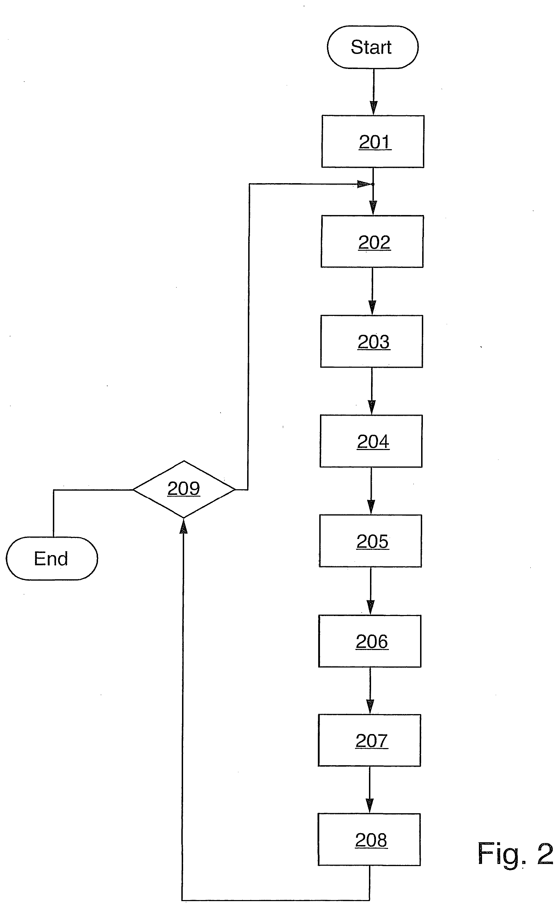

A method to assess the reliability of any specific application deployment in a data center, and to efficiently find the reliable deployment for an application even in a large-scale data center is described below referencing Figure 2.

In the method the reliability of application deployments is assessed by executing many simulation trials.

In each trial, certain components are considered as failed according to their failure probabilities.

The output of each trial is the reliability score of a specific deployment plan for the application, i.e., how likely K out of N replicas used in the deployment are reachable in this trial.

Eventually, a reliability score of each trial is taken into account, and a search for the most reliable deployment plan for this application is conducted.

Considering a deployment where the application runs with N replicas of the application, preferably on N different hosts, the application is considered to be reliable as long as K out of the N replicas are reachable from the gateway G, which is in the example connected to the Internet. This means that computer network 100 comprises at least one network node, e.g. gateway G, for accessing the computer network 100 and a plurality of components, e.g. hosts Host 20, ..., Host 35, for executing respective replica of the application according to a respective predetermined deployment. In this example the information about the reliability of the application is determined depending on the connectivity between the at least one network node and respective hosts according to the predetermined deployment.

Alternatively the information about the reliability may be assessed depending on connectivity among different replica of the application. This way, for example modelling of a chain of service within the application is supported by using one of the replicas of the application as the destination for example instead of the gateway G.

To assess a deployment some of the components in the topology of computer network 100 are intentionally set to a failed state. Then, for example, the Fat-Tree routing protocol is run to check how many replicas of the application can be reached by the gateway G.

This fail-and-check process is repeated many rounds, e.g. for Y rounds. Eventually, if at least K application replicas are reachable in X rounds, the reliability of the corresponding deployment is considered to be X/Y.

A component, preferably each component, fails in the example with a specific probability. It is assumed that an operator of the data center is running a management system for managing the data center components and/or infrastructure. The management system in the example monitors components and their respective failure probabilities.

The management system in the example provides an interface adapted to send information about a failure probability and a corresponding component of the computer network.

A corresponding device, in the example gateway G, for deploying an application in computer network 100 comprises a processor 110 and an interface 120 to the managing system. The interface is preferably adapted to receive information about the failure probability and the corresponding component of the computer network 100. The processor 110 is preferably adapted to select a deployment for the application according to the method described below.

Preferably the device, e.g. gateway G, is configured with an output 130 to output the selected deployment or to deploy the application in the computer network 100 according to the selected deployment by output of instructions for configuring respective network nodes of the computer network according to the selected deployment. Output 130 is for example a data interface for a terminal for an application developer or to send the instructions. The information provided by output 130 to the application developer is providing internal machine states of the computer network, that guide the application developer to the deployment required for the application to run with best possible or a predetermined reliability. The predetermined reliability target may be input to the processor 110 by interface 120 as a parameter.

According to the method, after the start, in a step 201 the information about the failure probability and corresponding components is received.

Afterwards in a step 202, a deployment for assessing the reliability is selected from a plurality of deployments available in the computer network. The plurality of deployments available in the computer network may be provided by the management system via the interface, or generated from the information regarding the components received in step 201. Preferably the reliability of each deployment is determined using a predetermined variance reduction criterion.

In an initialization, i.e. at first execution of step 202, a first deployment is selected as an initial deployment. In the example the initial deployment is determined by assigning random hosts to a random number of replicas of the application.

Afterwards a step 203 is executed. In step 203 the reachability of the first deployment is assessed. In the example the assessment is based on Monte-Carlo sampling, i.e. randomly generated failure states are assumed for each component according to the component's failure probability.

To this end, the generation of failure states is repeated to randomly generate the failure states for each component across the predetermined number of rounds Y. This produces for example the following table:

| | **S0** | **S1** | **... ...** | **S19** | **Host 20** | **Host 21** | **... ...** | **Host 35** |
|---|---|---|---|---|---|---|---|---|
| **Round 1** | Alive | Alive | ... ... | Failed | Alive | Failed | ... ... | Alive |
| **Round 2** | Failed | Failed | ... ... | Alive | Alive | Alive | ... ... | Alive |
| ...... | ...... | ...... | ... ... | ...... | ...... | ...... | ... ... | ...... |
| **Round Y** | Alive | Failed | ... ... | Failed | Failed | Alive | ... ... | Alive |

In the table above each row represents one round of sampling, and each column represents the failure states of the corresponding component across all the rounds.

The above-mentioned Monte-Carlo-sampling-based failure state generation provides a very simple assignment of the failure states to the corresponding components.

The number of rounds Y may be selected depending on the required accuracy because the generation of failure states can be repeated for multiple rounds to increase accuracy. Preferably the information about the reachability is determined for all components for deploying the application according to the predetermined deployment. Large-scale data centers may have at least tens of thousands of components. The components in data centers normally fail with low probabilities, e.g., 10⁻³ or even lower.

Considering all components may affect the speed of processing, to speed up the failure state generation, a variance reduction technique may be used. The speed of failure state generation is significantly increased by using for example Dagger Sampling. This method and other methods for variance reduction are specifically designed to enable efficient Monte-Carlo sampling for rare events in large-scale networks. Performing corresponding variance reduction is referred to as using a predetermined variance reduction criterion.

This way information about the reachability is determined by generating respective failure states for a plurality of hosts for deploying the application according to a predetermined deployment. Furthermore information about the reachability of the plurality of hosts is determined this way depending on the generated failure states.

Afterwards a step 204 is executed. In step 204, information about the reliability is determined for hosts for deploying the application according to the first deployment depending on the information about the reachability determined in step 203.

Preferably the randomly generated failure states for all components in each round are used. Then, for a host on which an application replica is being deployed, the Fat-Tree routing protocol is run to check whether this deployed host is reachable from the gateway G. This check is repeated for all the N hosts which are being used to deploy the application replicas.

If at least K out of these N hosts are reachable in this round, then this deployment is considered reliable for this round.

| | **Round 1** | **Round 2** | **......** | **Round Y** |
|---|---|---|---|---|
| **At least K of N deployed hosts reachable** | Yes | No | | Yes |

This is repeated for all the Y rounds. An exemplary result is given in the table above.

Preferably if the deployment is reliable in X rounds, then the reliability of this deployment is determined as X/Y. In the example X is a number of rounds that is smaller than the predetermined number of rounds Y.

This way information about the reliability of the predetermined first deployment for the application is determined.

Afterwards a step 205 is executed. In step 205, a second deployment for assessing the reliability is selected from the plurality of deployments available in the computer network. In the example the second deployment is determined by replacing one or more of the hosts used in the first deployment by random new hosts. Likewise random hosts may be assigned to another random number of replicas of the application as well.

Afterwards a step 206 is executed. In step 206, the reachability of the second deployment is assessed. In the example the assessment is made as described in step 203 above based on Monte-Carlo sampling. This means that randomly generated failure states are assumed for each component according to the component's failure probability

To this end, the generation of failure states is repeated to randomly generate the failure states for each component across a predetermined number of rounds. This produces for example a similar table as described in step 203.

This way information about the reliability of the predetermined second deployment for the application is determined.

Afterwards, a step 207 is executed. In step 207, the information about the reliability of the second deployment is determined for hosts for deploying the application according to the second deployment depending on the information about the reachability determined in step 206.

The information about the reliability is for example determined as described in step 204.

Afterwards a step 208 is executed.

In step 208 the information about the reliability of the first deployment is compared with the information about the reliability of the second deployment to select the first deployment or the second deployment for deploying the application in the computer network depending on the result of the comparison.

Preferably a deployment with a higher reliability is selected over a deployment with a lower reliability.

Alternatively or additionally a deployment with a lower reliability may be selected over a deployment with a higher reliability, depending on a predetermined acceptance probability.

The steps 202 to 208 are preferably repeated for further comparison of the deployment selected in step 208 with other deployments. To that end for example after the initial deployment has been determined in step 202, instead of determining the first deployment in step 202 again, the deployment selected in step 208 is used for any further repetition of step 202.

Preferably the steps 202 to 208 are repeated until a predetermined number of trials has been reached, or a predefined time period has passed, or a required reliability has been reached by the current selected deployment. A corresponding Test is executed in a step 209 in the example between steps 208 and 202.

An example for different results of repetitions is as follows:

| **Trial** | **Hosts for deployment** | **Reliability** | **Acceptance Probability** | **Select** |
|---|---|---|---|---|
| **1** | Host 20, Host 30 | 0.8 | - | Yes |
| **2** | Host 23, Host 30 | 0.95 | - | Yes |
| **3** | Host 23, Host 33 | 0.9 | No | No |
| **4** | Host 25, Host 30 | 0.85 | Yes | Yes |
| **5** | Host 25, Host 31 | 0.93 | - | Yes |
| ...... | ...... | ...... | | ...... |

According to this example, in Trial 1, e.g. the first deployment is initially accepted as initial deployment. In Trial 2, e.g. the second deployment is selected as deployment with higher reliability.

In Trial 3, e.g. a third deployment is not selected, because the reliability is less than the reliability of the previously selected deployment. In this case an optionally used predetermined acceptance probability is not met.

In Trial 4, e.g. a fourth deployment is selected despite having less reliability than the previously selected deployment. In this case the optionally used predetermined acceptance probability is met.

Using the acceptance probability avoids converging to a local optimum.

In Trial 5, e.g. a fifth deployment is selected as deployment with higher reliability than the previously selected deployment.

Preferably among all the trials, the deployment with the highest reliability is reported as the best deployment. The report is for example an output of the selected deployment.

Alternatively or additionally the deployment of the application in the computer network is an output of instructions for configuring respective network nodes of the computer network according to the selected deployment.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

The functions of the various elements shown in the figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any sequence diagrams represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A computer-implemented method for deploying an application in a computer network (100) comprising:
determining (202, 203, 204) information about a reliability of a predetermined first deployment for the application;
determining (205, 206, 207) information about a reliability of a predetermined second deployment for the application;
comparing (208) the information about the reliability of the first deployment with the information about the reliability of the second deployment;
selecting (208) the first deployment or the second deployment for deploying the application in the computer network (100) depending on the result of the comparison, **characterized in that**
the information about the reliability of the respective predetermined deployment is determined by **:**
generating (203, 206) respective failure states for a plurality of components for deploying the application according to the respective predetermined deployment;
determining (203, 206) information about a reachability of the plurality of components depending on the generated failure states; and
determining (204, 207) the information about the reliability of the respective predetermined deployment depending on the information about the reachability.

2. The method of claim 1, wherein the steps of determining (202,..., 207), comparing (208) and selecting (208) are repeated for further comparison of the deployment selected with other deployments, until a predetermined number of repetitions is reached, a predetermined time period has passed, or a predetermined reliability threshold has been reached (209) by the current selected deployment.

3. The method of claim 2, wherein the information about the reliability of the respective predetermined deployment is determined for all components for deploying the application according to the respective predetermined deployment.

4. The method of any of the previous claims, wherein a deployment with a higher reliability is selected over a deployment with a lower reliability.

5. The method of any of the claims 1 to 3, wherein a deployment with a lower reliability is selected over a deployment with a higher reliability, depending on a predetermined acceptance probability.

6. The method of any of the previous claims, wherein the reliability of the respective predetermined deployment is assessed by randomly generating a failure state for respective components of the computer network (100) based on a predetermined failure probability of the respective component.

7. The method of claim 6, comprising receiving (201) information about the failure probability and the respective component.

8. The method of any of claims 6 or 7, wherein a deployment for assessing the reliability thereof is selected from a plurality of deployments available in the computer network (100) using a predetermined variance reduction criterion.

9. The method of any of the previous claims, wherein the computer network (100) has one of a Fat Tree, BCube or DCell topology.

10. The method of any of the previous claims, wherein the computer network (100) comprises at least one network node (G) for accessing the computer network (100) and a plurality of hosts (Host 20, ... Host 35) for executing respective replica of the application according to the respective predetermined deployment, wherein the reliability of the respective predetermined deployment is determined depending on information about a reliability of the application, and wherein the information about the reliability of the application is determined depending on the connectivity between the at least one network node (G) and respective hosts (Host 20, ... Host 35) according to the predetermined deployment.

11. The method of any of the previous claims, wherein the information about the reliability of the application is assessed depending on connectivity among different replicas of the application.

12. A device (G) for deploying an application in a computer network (100) comprising a processor (110) adapted to:
determine information about a reliability of a predetermined first deployment for the application;
determine information about a reliability of a predetermined second deployment for the application;
compare the information about the reliability of the first deployment with the information about the reliability of the second deployment;
select the first deployment or the second deployment for deploying the application in the computer network (100) depending on the result of the comparison **characterized in that** the processor is adapted to determine the information about the reliability of the respective predetermined deployment by **:**
generating respective failure states for a plurality of devices for deploying the application according to the respective predetermined deployment;
determining information about a reachability of the plurality of devices depending on the generated failure states; and
determining the information about the reliability of the respective predetermined deployment depending on the information about the reachability.

13. The device (G) according to claim 12, comprising: an interface (120) for a management system of the computer network (100), adapted to receive information about a failure probability and a corresponding component of the computer network (100); and an output (130) for the selected deployment.

14. The device (G) according to claim 12 or 13, configured to deploy the application in the computer network (100) according to the selected deployment by output of instructions for configuring respective network nodes of the computer network (100) according to the selected deployment.

## Patentansprüche

1. Computerimplementiertes Verfahren zum Bereitstellen einer Anwendung in einem Computernetzwerk (100), das Folgendes umfasst:
Bestimmen (202, 203, 204) von Informationen über eine Zuverlässigkeit einer vorbestimmten ersten Bereitstellung für die Anwendung;
Bestimmen (205, 206, 207) von Informationen über eine Zuverlässigkeit einer vorbestimmten zweiten Bereitstellung für die Anwendung;
Vergleichen (208) der Informationen über die Zuverlässigkeit der ersten Bereitstellung mit den Informationen über die Zuverlässigkeit der zweiten Bereitstellung;
Auswählen (208) der ersten Bereitstellung oder der zweiten Bereitstellung zum Bereitstellen der Anwendung im Computernetzwerk (100) in Abhängigkeit vom Ergebnis des Vergleichs, **dadurch gekennzeichnet, dass**
die Informationen über die Zuverlässigkeit der jeweiligen vorbestimmten Bereitstellung durch Folgendes bestimmt werden:
Erzeugen (203, 206) von jeweiligen Fehlerzuständen für eine Vielzahl von Komponenten zum Bereitstellen der Anwendung gemäß der jeweiligen vorbestimmten Bereitstellung;
Bestimmen (203, 206) von Informationen über eine Erreichbarkeit der Vielzahl von Komponenten in Abhängigkeit von den erzeugten Fehlerzuständen; und
Bestimmen (204, 207) der Informationen über die Zuverlässigkeit der jeweiligen vorbestimmten Bereitstellung in Abhängigkeit von den Informationen über die Erreichbarkeit.

2. Verfahren nach Anspruch 1, wobei die Schritte des Bestimmens (202, ..., 207), des Vergleichens (208) und des Auswählens (208) für einen weiteren Vergleich der ausgewählten Bereitstellung mit anderen Bereitstellungen wiederholt werden, bis durch die derzeit ausgewählte Bereitstellung eine vorbestimmte Anzahl von Wiederholungen erreicht ist, eine vorbestimmte Zeitperiode vergangen ist oder ein vorbestimmter Zuverlässigkeitsschwellwert erreicht ist (209).

3. Verfahren nach Anspruch 2, wobei die Informationen über die Zuverlässigkeit der jeweiligen vorbestimmten Bereitstellung zum Bereitstellen der Anwendung gemäß der jeweiligen vorbestimmten Bereitstellung für alle Komponenten bestimmt werden.

4. Verfahren nach einem der vorhergehenden Ansprüche, wobei eine Bereitstellung mit einer größeren Zuverlässigkeit statt einer Bereitstellung mit einer geringeren Zuverlässigkeit ausgewählt wird.

5. Verfahren nach einem der Ansprüche 1 bis 3, wobei in Abhängigkeit von einer vorbestimmten Akzeptanzwahrscheinlichkeit eine Bereitstellung mit einer geringeren Zuverlässigkeit statt einer Bereitstellung mit einer größeren Zuverlässigkeit ausgewählt wird.

6. Verfahren nach einem der vorhergehenden Ansprüche, wobei die Zuverlässigkeit der jeweiligen vorbestimmten Bereitstellung durch willkürliches Erzeugen eines Fehlerzustands für jeweilige Komponenten des Computernetzwerks (100) auf Basis einer vorbestimmten Fehlerwahrscheinlichkeit der jeweiligen Komponente beurteilt wird.

7. Verfahren nach Anspruch 6, das das Empfangen (201) von Informationen über die Fehlerwahrscheinlichkeit und die jeweilige Komponente umfasst.

8. Verfahren nach einem der Ansprüche 6 oder 7, wobei eine Bereitstellung zum Beurteilen der Zuverlässigkeit davon unter Verwendung eines vorbestimmten Varianzreduzierungskriteriums aus einer Vielzahl von Bereitstellungen, die im Computernetzwerk (100) verfügbar sind, ausgewählt wird.

9. Verfahren nach einem der vorhergehenden Ansprüche, wobei das Computernetzwerk (100) eines von einer Fat-Tree-, einer BCube- oder einer DCell-Topologie aufweist.

10. Verfahren nach einem der vorhergehenden Ansprüche, wobei das Computernetzwerk (100) mindestens einen Netzwerkknoten (G) zum Zugreifen auf das Computernetzwerk (100) und eine Vielzahl von Hosts (Host 20, ... Host 35) zum Ausführen einer jeweiligen Replik der Anwendung gemäß der jeweiligen vorbestimmten Bereitstellung umfasst, wobei die Zuverlässigkeit der jeweiligen vorbestimmten Bereitstellung in Abhängigkeit von Informationen über eine Zuverlässigkeit der Anwendung bestimmt wird und wobei die Informationen über die Zuverlässigkeit der Anwendung in Abhängigkeit von der Konnektivität zwischen dem mindestens einen Netzwerkknoten (G) und jeweiligen Hosts (Host 20, ... Host 35) gemäß der vorbestimmten Bereitstellung bestimmt werden.

11. Verfahren nach einem der vorhergehenden Ansprüche, wobei die Informationen über die Zuverlässigkeit der Anwendung in Abhängigkeit von einer Konnektivität zwischen verschiedenen Repliken der Anwendung beurteilt werden.

12. Vorrichtung (G) zum Bereitstellen einer Anwendung in einem Computernetzwerk (100), die einen Prozessor (110) umfasst, der zu Folgendem angepasst ist:
Bestimmen von Informationen über eine Zuverlässigkeit einer vorbestimmten ersten Bereitstellung für die Anwendung;
Bestimmen von Informationen über eine Zuverlässigkeit einer vorbestimmten zweiten Bereitstellung für die Anwendung;
Vergleichen der Informationen über die Zuverlässigkeit der ersten Bereitstellung mit den Informationen über die Zuverlässigkeit der zweiten Bereitstellung;
Auswählen der ersten Bereitstellung oder der zweiten Bereitstellung zum Bereitstellen der Anwendung im Computernetzwerk (100) in Abhängigkeit vom Ergebnis des Vergleichs, **dadurch gekennzeichnet, dass** der Prozessor angepasst ist, die Informationen über die Zuverlässigkeit der jeweiligen vorbestimmten Bereitstellung durch Folgendes zu bestimmen:
Erzeugen von jeweiligen Fehlerzuständen für eine Vielzahl von Vorrichtungen zum Bereitstellen der Anwendung gemäß der jeweiligen vorbestimmten Bereitstellung;
Bestimmen von Informationen über eine Erreichbarkeit der Vielzahl von Vorrichtungen in Abhängigkeit von den erzeugten Fehlerzuständen; und
Bestimmen der Informationen über die Zuverlässigkeit der jeweiligen vorbestimmten Bereitstellung in Abhängigkeit von den Informationen über die Erreichbarkeit.

13. Vorrichtung (G) nach Anspruch 12, die Folgendes umfasst: eine Schnittstelle (120) für ein Verwaltungssystem des Computernetzwerks (100), das angepasst ist, Informationen über eine Fehlerwahrscheinlichkeit und eine entsprechende Komponente des Computernetzwerks (100) zu empfangen; und eine Ausgabe (130) für die ausgewählte Bereitstellung.

14. Vorrichtung (G) nach Anspruch 12 oder 13, die dazu ausgelegt ist, die Anwendung gemäß der ausgewählten Bereitstellung durch Ausgeben von Anweisungen zum Auslegen von jeweiligen Netzwerkknoten des Computernetzwerks (100) gemäß der ausgewählten Bereitstellung im Computernetzwerk (100) bereitzustellen.

## Revendications

1. Procédé mis en œuvre par ordinateur pour déployer une application dans un réseau d'ordinateurs (100) comprenant :
la détermination (202, 203, 204) d'informations concernant une fiabilité d'un premier déploiement prédéterminé pour l'application ;
la détermination (205, 206, 207) d'informations concernant une fiabilité d'un second déploiement prédéterminé pour l'application ;
la comparaison (208) des informations concernant la fiabilité du premier déploiement avec les informations concernant la fiabilité du second déploiement ;
la sélection (208) du premier déploiement ou du second déploiement pour déployer l'application dans le réseau d'ordinateurs (100) en fonction du résultat de la comparaison, **caractérisé en ce que**
les informations concernant la fiabilité du déploiement prédéterminé respectif sont déterminées par :
la génération (203, 206) d'états d'échec respectifs pour une pluralité de composants pour déployer l'application selon le déploiement prédéterminé respectif ;
la détermination (203, 206) d'informations concernant une accessibilité de la pluralité de composants en fonction de
les états d'échec générés ; et
la détermination (204, 207) des informations concernant la fiabilité du déploiement prédéterminé respectif en fonction des informations concernant l'accessibilité.

2. Procédé selon la revendication 1, dans lequel les étapes de la détermination (202, ..., 207), de la comparaison (208) et de la sélection (208) sont répétées pour une comparaison ultérieure du déploiement sélectionné avec d'autres déploiements, jusqu'à ce qu'un nombre prédéterminé de répétitions soit atteint, qu'une durée prédéterminée se soit écoulée ou qu'un seuil de fiabilité prédéterminé ait été atteint (209) par le déploiement sélectionné actuel.

3. Procédé selon la revendication 2, dans lequel les informations concernant la fiabilité du déploiement prédéterminé respectif sont déterminées pour tous les composants pour déployer l'application selon le déploiement prédéterminé respectif.

4. Procédé selon l'une quelconque des revendications précédentes, dans lequel un déploiement ayant une fiabilité supérieure est sélectionné prioritairement sur un déploiement ayant une fiabilité inférieure.

5. Procédé selon l'une quelconque des revendications 1 à 3, dans lequel un déploiement ayant une fiabilité inférieure est sélectionné prioritairement sur un déploiement ayant une fiabilité supérieure, en fonction d'une probabilité d'acceptation prédéterminée.

6. Procédé selon l'une quelconque des revendications précédentes, dans lequel la fiabilité du déploiement prédéterminé respectif est évaluée par la génération, de manière aléatoire, d'un état d'échec pour des composants respectifs du réseau d'ordinateurs (100) sur la base d'une probabilité d'échec prédéterminée du composant respectif.

7. Procédé selon la revendication 6, comprenant la réception (201) d'informations concernant la probabilité d'échec et le composant respectif.

8. Procédé selon l'une quelconque des revendications 6 ou 7, dans lequel un déploiement pour évaluer la fiabilité de celui-ci est sélectionné parmi une pluralité de déploiements disponibles dans le réseau d'ordinateurs (100) à l'aide d'un critère de réduction de variance prédéterminé.

9. Procédé selon l'une quelconque des revendications précédentes, dans lequel le réseau d'ordinateurs (100) possède l'une parmi une topologie Fat Tree, BCube ou DCell.

10. Procédé selon l'une quelconque des revendications précédentes, dans lequel le réseau d'ordinateurs (100) comprend au moins un nœud de réseau (G) pour accéder au réseau d'ordinateurs (100) et une pluralité d'hôtes (Hôte 20, ..., Hôte 35) pour exécuter une réplique respective de l'application selon le déploiement prédéterminé respectif, dans lequel la fiabilité du déploiement prédéterminé respectif est déterminée en fonction d'informations concernant une fiabilité de l'application, et dans lequel les informations concernant la fiabilité de l'application sont déterminées en fonction de la connectivité entre l'au moins un nœud de réseau (G) et les hôtes respectifs (Hôte 20, ..., Hôte 35) selon le déploiement prédéterminé.

11. Procédé selon l'une quelconque des revendications précédentes, dans lequel les informations concernant la fiabilité de l'application sont évaluées en fonction d'une connectivité entre différentes répliques de l'application.

12. Dispositif (G) pour déployer une application dans un réseau d'ordinateurs (100) comprenant un processeur (110) conçu pour :
déterminer des informations concernant une fiabilité d'un premier déploiement prédéterminé pour l'application ;
déterminer des informations concernant une fiabilité d'un second déploiement prédéterminé pour l'application ;
comparer les informations concernant la fiabilité du premier déploiement avec les informations concernant la fiabilité du second déploiement ;
sélectionner le premier déploiement ou le second déploiement pour déployer l'application dans le réseau d'ordinateurs (100) en fonction du résultat de la comparaison,
**caractérisé en ce que** le processeur est conçu pour déterminer les informations concernant la fiabilité du déploiement prédéterminé respectif par :
la génération d'états d'échec respectifs pour une pluralité de dispositifs pour déployer l'application selon le déploiement prédéterminé respectif ;
la détermination d'informations concernant une accessibilité de la pluralité de dispositifs en fonction des états d'échec générés ; et
la détermination des informations concernant la fiabilité du déploiement prédéterminé respectif en fonction des informations concernant l'accessibilité.

13. Dispositif (G) selon la revendication 12, comprenant : une interface (120) pour un système de gestion du réseau d'ordinateurs (100), conçue pour recevoir des informations concernant une probabilité d'échec et un composant correspondant du réseau d'ordinateurs (100) ; et une sortie (130) pour le déploiement sélectionné.

14. Dispositif (G) selon la revendication 12 ou 13, configuré pour déployer l'application dans le réseau d'ordinateurs (100) selon le déploiement sélectionné par la sortie d'instructions pour configurer des nœuds de réseau respectifs du réseau d'ordinateurs (100) selon le déploiement sélectionné.
